# EUROPEAN PATENT APPLICATION

(11) **EP 4 296 007 A1**
(43) Date of publication of application: **27.12.2023**
(21) Application number: 23165878.2
(22) Date of filing: 31.03.2023
(51) Int. Cl.: B25F 3/00, A01G 3/08, B25F 5/02, B27B 17/00

(54) **HANDHELD POWER TOOL, POLE EXTENSION UNIT AND POWER TOOL ASSEMBLY**

(30) Priority: 09.05.2022 SE 2250559
(71) Applicant: Husqvarna AB, 561 82 Huskvarna (SE)
(72) Inventor: Martinsson, Pär, 556 26 Jönköping (SE); Isén, Henric, 561 93 Huskvarna (SE); Hjelm, Johan, 564 34 Bankeryd (SE); Rief, Joachim, 895 84 Ehingen (DE)

(57) **Abstract**

A handheld power tool (1) comprising a tool (8), a motor (2) configured to power the tool (8), an actuator (3), a control arrangement (21), and a connector portion (5) configured to receive a pole connector portion (15) of a pole extension unit (10) for increasing the reach of the power tool (1). The power tool (1) comprises a safety switch (9) configured to switch from a first state to a second state when a pole connector portion (15) is attached to the connector portion (5) of the power tool (1). The control arrangement (21) is configured to prevent a control of operation of the motor (2) based on input from the actuator (3) when the safety switch (9) is in the second state. The present disclosure further relates to a pole extension unit (10) and power tool assembly (20) comprising a handheld power tool (1), and a pole extension unit (10) for increasing the reach of the power tool (1).

## Description

### TECHNICAL FIELD

The present disclosure relates to a handheld power tool comprising a tool and a motor configured to power the tool. The present disclosure further relates to a pole extension unit configured to increase the reach of a handheld power tool. Moreover, the present disclosure relates to a power tool assembly comprising a handheld power tool and a pole extension unit configured to increase the reach of the power tool.

### BACKGROUND

A handheld power tool is a tool intended to be supported by one or two hands of a user during operation. Moreover, a handheld power tool comprises a tool which can be driven by a power source other than solely manual labour. The power source may for example comprise a combustion engine, an electric motor, a pneumatic motor, or the like. Today, there are many kinds of power tools available on the market. Examples are chain saws, circular saws, jigsaws, trimmers, hedge trimmers, string-trimmers, brush-cutters, multi-tools, and the like. Power tools are for example used in industry, in construction, in gardens, for housework tasks, and around houses for purposes of cutting, shaping, sanding, grinding, routing, polishing, and the like.

Power tools of various kind are associated with some mutual problems. One problem is safety. That is, a power tool can comprise a sharp tool and a powerful power source for powering the tool, which poses a safety risk.

Another problem is that in some situations, it may be wanted to use a power tool at places being difficult to reach. As an example, a problem for professionals and gardeners is that some branches of a tree are located at a considerable height from the ground surface making them difficult to reach without climbing the tree, using a ladder, a stool, or the like. Climbing a tree and using ladder, a stool, or the like is burdensome, poses a safety risk, and is not ergonomic.

Pole power tools have been developed by some manufacturers to alleviate this problem. A pole power tool is a power tool comprising a pole with a handle portion at one end and a tool unit arranged at the other end. The length of the pole allows a user to reach areas at considerable distances with the tool unit. This can for example facilitate the process of cutting branches at considerable heights while standing on a ground surface. That is, by using a pole power tool, the user does not have to climb the tree or use a use a ladder, a stool, or the like, to cut the branch.

A drawback with pole power tools is that they are usually specifically adapted to be used for processing objects at considerable distances from the user and are usually difficult, unsuitable, and/or impossible to use when wanting to process objects at smaller distances, such as objects being within the reach of the user. Therefore, users normally have to purchase two power tools, such as a handheld power tool for processing objects located at smaller distances from the user and a pole power tool for processing objects located at larger distances from the user. The purchase of two power tools may be costly. Moreover, it may be burdensome to handle, carry, and store two different power tools.

As a reason thereof, some manufacturers have developed so-called pole extension units which can be attached to a handheld power tool to increase the reach of the handheld power tool. In this manner, the same handheld power tool can be used to process objects located at close distances from a user and can be used to process objects located at larger distances from the user simply by attaching the handheld power tool to the pole extension unit. Accordingly, such a pole extension unit can increase the versability of the handheld power tool.

However, a problem shared with pole power tools and pole extension units is safety and pole power tools and pole extension units may be more difficult to use in a safe manner as compared to smaller handheld power tools. For example, the length of the pole may make the power tool more difficult to manoeuvre and support during use which may pose a safety risk.

A further general problem when designing power tools and associated components and assemblies is user-friendliness. That is, it is an advantage if the power tool and associated components and assemblies are designed such that a user can operate the power tool in a simple and an intuitive manner.

In addition, generally, on today's consumer market, it is an advantage if products comprise different features and functions while the products have conditions and/or characteristics suitable for being manufactured and assembled in a cost-efficient manner.

### SUMMARY

It is an object of the present invention to overcome, or at least alleviate, at least some of the above-mentioned problems and drawbacks.

According to a first aspect of the invention, the object is achieved by a handheld power tool comprising a tool, a motor configured to power the tool, an actuator, a control arrangement, and a connector portion configured to receive a pole connector portion of a pole extension unit for increasing the reach of the power tool. The power tool comprises a safety switch configured to switch from a first state to a second state when a pole connector portion is attached to the connector portion of the power tool. The control arrangement is configured to prevent a control of operation of the motor based on input from the actuator when the safety switch is in the second state.

Since the power tool comprises the safety switch configured to switch to the second state when a pole connector portion is attached to the connector portion of the power tool, a power tool is provided which can be used in a safer manner together with a pole extension unit, i.e., can be used in a safer manner when a pole connector portion of a pole extension unit is attached to the connector portion of the power tool. This is because the control arrangement is configured to prevent a control of operation of the motor based on input from the actuator when the safety switch is in the second state.

Accordingly, the control arrangement is configured to prevent a control of operation of the motor based on input from the actuator when a pole connector portion of a pole extension unit is attached to the connector portion of the power tool. In this manner, it can be ensured that the motor does not start to operate if the actuator is inadvertently actuated when a pole connector portion is attached to the connector portion of the power tool.

An unintended actuation of the actuator may for example occur if a user inadvertently manoeuvres the pole extension unit with the power tool attached thereto such that the actuator of the power tool is pressed against an object, such as a small tree branch, or the like. As another example, an unintended actuation of the actuator may for example occur if a user loses control of the pole extension unit such that the power tool attached to the pole connector portion of the pole extension unit hits a ground surface, falls into a bush, or the like.

Thus, due to the features of the power tool, it can be ensured that the motor does not start to operate upon such unintended actuations of the actuator when a pole connector portion is attached to the connector portion of the power tool. As a result, a power tool is provided which can be used in a safer manner together with a pole extension unit.

Accordingly, a handheld power tool is provided overcoming, or at least alleviating, at least some of the above-mentioned problems and drawbacks. As a result, the above-mentioned object is achieved.

Optionally, the motor is an electric motor. Thereby, a power tool is provided having conditions for having a low weight and for being silent and environmentally friendly.

Optionally, the power tool comprises an actuator switch operably connected to the actuator, and wherein the control arrangement is configured to prevent a control of the operation of the motor based on input from the actuator by ignoring input from the actuator switch. Thereby, a power tool is provided having conditions for a simple, efficient, and reliable prevention of control of operation of the motor based on input from the actuator when a pole connector portion is attached to the connector portion of the power tool. Moreover, a power tool is provided having conditions and characteristics suitable for being manufactured and assembled in a cost-efficient manner.

Optionally, the connector portion is a battery connector portion capable of receiving a battery when no pole connector portion is attached to the connector portion. Thereby, a power tool is provided having conditions for being compact, light in weight, and user-friendly. This is because the connector portion of the power tool is capable of receiving a pole connector portion of a pole extension unit or a battery when no pole connector portion is attached to the connector portion. In this manner, the need for two separate connector portions is circumvented. As a further result, a power tool is provided having conditions and characteristics suitable for being manufactured and assembled in a cost-efficient manner.

Optionally, the connector portion of the power tool comprises an attachment aperture for receiving a fastening element of a pole connector portion, and wherein the safety switch is configured to switch from the first state to the second state when a fastening element of a pole connector portion is inserted into the attachment aperture. Thereby, it can be ensured that the power tool can be attached to the pole connector portion of a pole extension unit in a simple, efficient, and reliable manner. Moreover, it can be ensured that a control of the operation of the motor based on input from the actuator is prevented in a simple, efficient, and reliable manner when a pole connector portion is attached to the connector portion of the power tool.

Optionally, the power tool comprises a mechanical linkage comprising a first portion located at an end section of the attachment aperture and a second portion operably connecting the first portion to the safety switch. Thereby, it can be ensured that a control of the operation of the motor based on input from the actuator is prevented in a simple, efficient, and reliable manner when a pole connector portion is attached to the connector portion of the power tool. Furthermore, the safety switch can be protected from becoming damaged if a user forces the fastening element further into the attachment aperture than what is intended.

Optionally, at least a portion of the attachment aperture comprises threads. Thereby, it is ensured that the power tool can be attached to the pole connector portion of a pole extension unit in a simple, efficient, and reliable manner.

Optionally, the power tool comprises a user interface, and wherein the control arrangement is configured to render the user interface inoperable when the safety switch is in the second state. Thereby, an even safer power tool can be provided. This is because a user may verify that the power tool has been correctly attached to a pole connector portion of a pole extension unit simply by ensuring that the user interface is inoperable after attaching the pole connector portion of the pole extension unit to the connector portion of the power tool. Furthermore, a more energy efficient power tool can be provided because one or more electrical components of the user interface may be inoperable when a pole connector portion is correctly attached to the connector portion of the power tool.

Optionally, the power tool comprises an activation switch for switching the control arrangement between an active state and a passive state, the active state constituting a state in which the control arrangement initiates operation of the motor upon actuation of the actuator, and the passive state constituting a state in which the control arrangement does not initiate operation of the motor upon actuation of the actuator, and wherein the control arrangement is configured to assume the passive state when the safety switch is switched to the second state. Thereby, it can be ensured that a control of the operation of the motor based on input from the actuator is prevented in a simple, efficient, and reliable manner when a pole connector portion is attached to the connector portion of the power tool. Moreover, an even safer power tool can be provided. This is because a user may verify that the power tool has been correctly attached to a pole connector portion of a pole extension unit simply by ensuring that the control arrangement is in the passive state after attaching the connector portion of the power tool to the pole connector portion of the pole extension unit.

Optionally, the connector portion of the power tool comprises a set of electrical contacts configured to abut against a set of electrical contacts of a pole connector portion when a pole connector portion is attached to the connector portion, and wherein the control arrangement is configured to operate the motor if the safety switch is in the second state and electricity is supplied to the set of electrical contacts of the connector portion of the power tool. Thereby, a power tool is provided having conditions for being operated in a simple, safe, and user-friendly manner when attached to a pole connector portion of a pole extension unit. Moreover, a power tool is provided having conditions and characteristics suitable for being manufactured and assembled in a cost-efficient manner.

Optionally, the motor is an electric motor, and wherein the control arrangement is configured to transfer electricity from the set of electrical contacts of the connector portion to the motor if the safety switch is in the second state. Thereby, a power tool is provided having conditions for being operated in a simple, safe, and user-friendly manner when attached to a pole connector portion of a pole extension unit. Moreover, a power tool is provided having conditions and characteristics suitable for being manufactured and assembled in a cost-efficient manner.

Optionally, the power tool is a handheld cutting tool. Thereby, a handheld cutting tool is provided which can be used in a safer manner together with a pole extension unit, i.e., can be used in a safer manner when a pole connector portion of a pole extension unit is attached to the connector portion of the handheld cutting tool.

According to a second aspect of the invention, the object is achieved by a pole extension unit configured to increase the reach of a handheld power tool, wherein the handheld power tool is a power tool according to some embodiments of the present disclosure. The pole extension unit comprises a pole connector portion configured to be connected to the connector portion of the power tool to increase the reach of the handheld power tool, wherein the pole connector portion is configured to cause the safety switch to switch from the first state to the second state when the pole connector portion is attached to the connector portion of the power tool.

Since the pole connector portion is configured to cause the safety switch to switch from the first state to the second state when the pole connector portion is attached to the connector portion of the power tool, a pole extension unit is provided capable of an enhancing operational safety when used together with a power tool. This is because it can be ensured that the motor of the power tool does not start to operate if the actuator of the power tool is inadvertently actuated when the pole connector portion is attached to the connector portion of the power tool.

Thus, due to the features of the pole extension unit, it can be ensured that the motor of the power tool does not start to operate upon such unintended actuations of the actuator. As a result, a pole extension unit is provided which can be used in a safer manner together with a power tool.

Accordingly, a pole extension unit is provided overcoming, or at least alleviating, at least some of the above-mentioned problems and drawbacks. As a result, the above-mentioned object is achieved.

Optionally, the connector portion of the power tool comprises an attachment aperture, and wherein the pole connector portion comprises a fastening element configured to protrude into the attachment aperture to attach the pole connector portion to the connector portion, and wherein the fastening element of the pole connector portion is configured to cause the safety switch to switch from the first state to the second state when the fastening element is inserted into the attachment aperture. Thereby, it can be ensured that the pole connector portion of the pole extension unit can be attached to the power tool unit in a simple, efficient, and reliable manner. Moreover, it can be ensured that a control of the operation of the motor based on input from the actuator is prevented in a simple, efficient, and reliable manner when the pole connector portion is attached to the connector portion of the power tool.

Optionally, the pole connector portion comprises a set of electrical contacts configured to abut against a set of electrical contacts of the connector portion of the power tool when the pole connector portion is attached to the connector portion of the power tool, wherein the pole extension unit comprises a pole actuator and a battery connector portion for receiving a battery, and wherein the pole extension unit is configured to transfer electricity from the battery connector portion to the set of electrical contacts upon actuation of the pole actuator. Thereby, a pole extension unit is provided having conditions for being used with a power tool in a simple, safe, and user-friendly manner. This is because the pole extension unit can be used to operate the power tool simply by attaching the pole connector portion of the pole extension unit to the connector portion of the power tool, attaching a battery to the battery connector portion of the pole extension unit, and actuating the pole actuator.

Optionally, the pole extension unit comprises a locking mechanism transferable between a locked state, in which the locking mechanism prevents actuation of the pole actuator, and an unlocked state, in which the locking mechanism allows actuation of the pole actuator. Thereby, a pole extension unit is provided having conditions for a further enhanced operational safety. This is because the locking mechanism can be used to prevent unintended actuations of the pole actuator and thereby also unintended initiation of operation of the motor of the power tool.

Optionally, the locking mechanism is configured to mechanically lock movement of the pole actuator when the locking mechanism is in the locked state. Thereby, unintended actuations of the pole actuator can be prevented in a simple, efficient, and reliable manner. Furthermore, a more user-friendly pole extension unit is provided because a user may recognize that the locking mechanism is in the locked state in a simple and intuitive manner simply by pressing on the actuator.

Optionally, the pole extension unit comprises a pole actuator switch configured to switch from a first state to a second state upon actuation of the pole actuator, and wherein the pole extension unit is configured to transfer electricity from the battery connector portion to the set of electrical contacts when the pole actuator switch is switched to the second state. Thereby, a pole extension unit is provided having conditions for being used with a power tool in a simple, safe, and user-friendly manner. This is because the pole extension unit can be used to operate the power tool simply by attaching the pole connector portion of the pole extension unit to the connector portion of the power tool, attaching a battery to the battery connector portion of the pole extension unit, and actuating the pole actuator. Moreover, a pole extension unit is provided having conditions and characteristics suitable for being manufactured and assembled in a cost-efficient manner.

Optionally, the pole extension unit comprises a battery connector portion at a first end portion of the pole extension unit, wherein the pole connector portion is arranged at a second end portion of the pole extension unit, and wherein the second end portion is opposite to the first end portion. Thereby, a user-friendly pole extension unit is provided having conditions for being used in a safe and intuitive manner for increasing the reach of a power tool.

According to a third aspect of the invention, the object is achieved by a power tool assembly comprising a handheld power tool, and a pole extension unit configured to increase the reach of the power tool. The power tool comprises a tool, a motor configured to power the tool, an actuator, a control arrangement, and a connector portion configured to receive a pole connector portion of the pole extension unit for increasing the reach of the power tool. The power tool comprises a safety switch configured to switch from a first state to a second state when the pole connector portion is attached to the connector portion of the power tool. The control arrangement is configured to prevent a control of operation of the motor based on input from the actuator when the safety switch is in the second state.

Since the power tool of the power tool assembly comprises the safety switch configured to switch to the second state when the pole connector portion is attached to the connector portion of the power tool, a power tool assembly is provided which can be used in a safer manner when the pole connector portion of the pole extension unit is attached to the connector portion of the power tool. This is because the control arrangement of the power tool is configured to prevent a control of operation of the motor based on input from the actuator when the safety switch is in the second state.

Accordingly, the control arrangement of the power tool is configured to prevent a control of operation of the motor based on input from the actuator when the pole connector portion of the pole extension unit is attached to the connector portion of the power tool. In this manner, it can be ensured that the motor of the power tool does not start to operate if the actuator is inadvertently actuated when the pole connector portion is attached to the connector portion of the power tool.

An unintended actuation of the actuator may for example occur if a user inadvertently manoeuvres the pole extension unit with the power tool attached thereto such that the actuator of the power tool is pressed against an object, such as a small tree branch, or the like. As another example, an unintended actuation of the actuator may for example occur if a user loses control of the pole extension unit such that the power tool attached to the pole connector portion of the pole extension unit hits a ground surface, falls into a bush, or the like.

Thus, due to the features of the power tool assembly, it can be ensured that the motor does not start to operate upon such unintended actuations of the actuator when the pole connector portion is attached to the connector portion of the power tool. As a result, a power tool assembly is provided which can be used in a safer manner.

Accordingly, a power tool assembly is provided overcoming, or at least alleviating, at least some of the above-mentioned problems and drawbacks. As a result, the above-mentioned object is achieved.

The power tool assembly according to the third aspect of the invention may comprise a power tool according to embodiments of the first aspect of the invention. Likewise, the power tool assembly according to the third aspect of the invention may comprise a pole extension unit according to embodiments of the second aspect of the invention.

Optionally, one of the connector portion of the power tool and the pole connector portion comprises a slot and the other of the connector portion of the power tool and the pole connector portion comprises a protrusion configured to protrude into the slot when the pole connector portion is attached to the connector portion of the power tool. Thereby, it can be ensured that the pole connector portion of the pole extension unit can be attached to the connector portion of the power tool in a simple, efficient, and reliable manner. Moreover, a user-friendly power tool assembly is provided having conditions for being used in a simple and intuitive manner.

Optionally, the connector portion of the power tool is a battery connector portion capable of receiving a battery when no pole connector portion is attached to the connector portion, and wherein the pole extension unit comprises a battery connector portion adapted to receive a battery of the same type and design as the connector portion of the power tool. Thereby, a user-friendly power tool assembly is provided having conditions for being used in a simple, safe, and intuitive manner. Moreover, a power tool assembly is provided allowing the use of the same battery when operating the power tool with the pole connector portion of the pole extension unit connected to the connector portion thereof as when operating the power tool with the battery attached to the connector portion of the power tool.

Accordingly, as a result thereof, a power tool assembly is provided having conditions for a facilitated handling, storage, and operation of the components of the power tool assembly. In addition, a power tool assembly is provided having conditions for lowering purchase costs as well as environmental impacts of battery production of batteries for the power tool assembly.

Furthermore, a power tool assembly is provided in which the power tool has conditions for being compact, light in weight, and user-friendly. This is because the connector portion of the power tool is capable of receiving a pole connector portion of a pole extension unit or a battery when no pole connector portion is attached to the connector portion. In this manner, the need for two separate connector portions is circumvented. As a further result, a power tool is provided having conditions and characteristics suitable for being manufactured and assembled in a cost-efficient manner.

Optionally, the connector portion of the power tool comprises an attachment aperture, and wherein the pole connector portion of the pole extension unit comprises a fastening element configured to protrude into the attachment aperture to attach the pole connector portion to the connector portion, and wherein the fastening element of the pole connector portion is configured to cause the safety switch to switch from the first state to the second state when the fastening element is inserted into the attachment aperture.

Thereby, it can be ensured that the pole connector portion of the pole extension unit can be attached to the power tool unit in a simple, efficient, and reliable manner. Moreover, it can be ensured that a control of the operation of the motor based on input from the actuator is prevented in a simple, efficient, and reliable manner when the pole connector portion is attached to the connector portion of the power tool.

Optionally, the pole connector portion of the pole extension unit comprises a set of electrical contacts configured to abut against a set of electrical contacts of the connector portion of the power tool when the pole connector portion is attached to the connector portion of the power tool, wherein the pole extension unit comprises a pole actuator and a battery connector portion for receiving a battery, and wherein the pole extension unit is configured to transfer electricity from the battery connector portion to the set of electrical contacts upon actuation of the pole actuator.

Thereby, a power tool assembly is provided having conditions for being used in a simple, safe, and user-friendly manner. This is because the pole extension unit can be used to operate the power tool simply by attaching the pole connector portion of the pole extension unit to the connector portion of the power tool, attaching a battery to the battery connector portion of the pole extension unit, and actuating the pole actuator.

Optionally, the pole extension unit comprises a locking mechanism transferable between a locked state, in which the locking mechanism prevents actuation of the pole actuator, and an unlocked state, in which the locking mechanism allows actuation of the pole actuator. Thereby, a power tool assembly is provided having conditions for a further enhanced operational safety. This is because the locking mechanism of the pole extension unit can be used to prevent unintended actuations of the pole actuator of the pole extension unit of the power tool assembly.

Optionally, the locking mechanism is configured to mechanically lock movement of the pole actuator when the locking mechanism is in the locked state. Thereby, unintended actuations of the pole actuator can be prevented in a simple, efficient, and reliable manner. Furthermore, a power tool assembly is provided comprising a more user-friendly pole extension unit because a user may recognize that the locking mechanism is in the locked state in a simple and intuitive manner simply by pressing on the actuator.

Optionally, the pole extension unit of the power tool assembly comprises a pole actuator switch configured to switch from a first state to a second state upon actuation of the pole actuator, and wherein the pole extension unit is configured to transfer electricity from the battery connector portion to the set of electrical contacts when the pole actuator switch is switched to the second state.

Thereby, a power tool assembly is provided having conditions for being used in a simple, safe, and user-friendly manner. This is because the pole extension unit can be used to operate the power tool simply by attaching the pole connector portion of the pole extension unit to the connector portion of the power tool, attaching a battery to the battery connector portion of the pole extension unit, and actuating the pole actuator. Moreover, a power tool assembly is provided having conditions and characteristics suitable for being manufactured and assembled in a cost-efficient manner.

Optionally, the pole extension unit of the power tool assembly comprises a battery connector portion at a first end portion of the pole extension unit, wherein the pole connector portion is arranged at a second end portion of the pole extension unit, and wherein the second end portion is opposite to the first end portion. Thereby, a user-friendly power tool assembly is provided having conditions for being used in a safe and intuitive manner.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a power tool according to some embodiments of the present disclosure,
Fig. 2 illustrates the power tool according to the embodiments illustrated in Fig. 1 with a battery attached to a connector portion of the power tool,
Fig. 3 illustrates a pole extension unit according to some embodiments of the present disclosure,
Fig. 4 illustrates an enlarged perspective view of a pole connector portion of the pole extension unit illustrated in Fig. 3,
Fig. 5 illustrates a power tool assembly according to some embodiments of the present disclosure,
Fig. 6 illustrates a cross section of a portion of the power tool assembly illustrated in Fig. 5,
Fig. 7 illustrates an enlarged view of the cross section of Fig. 6,
Fig. 8 illustrates a cross section of a portion of the pole extension unit according to embodiments illustrated in Fig. 3 - Fig. 7, and
Fig. 9 schematically illustrates an electrical assembly of the power tool assembly explained with reference to Fig. 1 - Fig. 8.

### DETAILED DESCRIPTION

Aspects of the present invention will now be described more fully. Like numbers refer to like elements throughout. Well-known functions or constructions will not necessarily be described in detail for brevity and/or clarity.

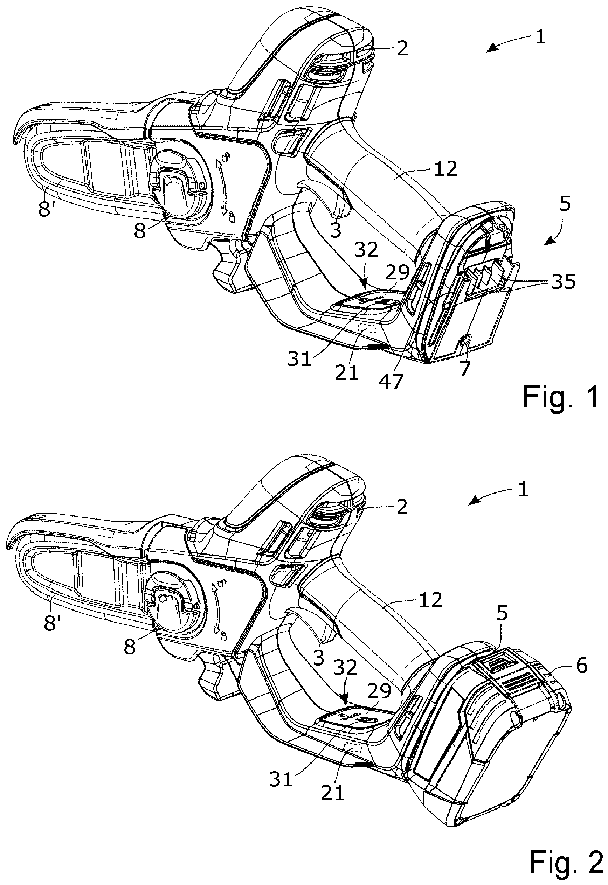

**Fig. 1** illustrates a handheld power tool 1 according to some embodiments of the present disclosure. The handheld power tool 1 is in some places herein referred to as "the power tool 1" for reasons of brevity and clarity.

The power tool 1 comprises a tool 8 a motor 2 configured to power the tool 8. According to the illustrated embodiments, the power tool 1 is a small sized handheld chainsaw. Thus, according to the illustrated embodiments, the power tool 1 comprises a tool 8 in the form of a cutting chain. In Fig. 1, the power tool 1 comprises a tool cover 8' covering the cutting chain, i.e., covering the tool 8.

According to further embodiments, the power tool 1, as referred to herein, may be another type of handheld power tool 1. For example, the power tool 1, as referred to herein, may be a larger type of chain saw, a circular saw, a jigsaw, a trimmer, a hedge trimmer, a string-trimmer, a brush-cutter, a multi-tool, or the like.

The feature that the power tool 1 is "handheld" means that the power tool 1 is configured to be supported by one or two hands of a user during operation. According to the illustrated embodiments, the power tool 1 comprises a handle portion 12 and an actuator 3 for controlling operation of the motor 2. According to the illustrated embodiments, the actuator 3 is arranged at the handle portion 12.

According to the illustrated embodiments, the motor 2 is an electric motor configured to be powered via a set of electrical contacts 35 of a connector portion 5 of the power tool 1. In Fig. 1, no battery is attached to the connector portion 5. According to further embodiments, the power tool 1 may comprise another type of motor, such as a pneumatic motor or an internal combustion engine.

**Fig. 2** illustrates the power tool 1 according to the embodiments illustrated in Fig. 1 with a battery 6 attached to the connector portion 5 of the power tool 1. According to the illustrated embodiments, the battery 6 is a rechargeable battery pack. Below, simultaneous reference is made to Fig. 1 and Fig. 2, if not indicated otherwise.

The battery 6 comprises a set of electrical contact configured to abut against the set of electrical contacts 35 of the connector portion 5 of the power tool 1 when the battery 6 is attached to the connector portion 5 of the power tool 1.

Moreover, the power tool 1 comprises a control arrangement 21 which is schematically indicated in Fig. 1 and Fig. 2. As is further explained herein, the control arrangement 21 is configured to initiate operation of the motor 2 upon actuation of the actuator 3 when the control arrangement 21 is in an active state. In other words, the control arrangement 21 is configured to control of operation of the motor 2 based on input from the actuator 3 when the control arrangement 21 is in the active state. According to the illustrated embodiments, the control arrangement 21 is configured to initiate operation of the motor 2 upon actuation of the actuator 3 by supplying electricity from the set of electrical contacts 35 to the motor 2.

As can be seen in Fig. 1 and Fig. 2, according to the illustrated embodiments, the power tool 1 comprises a user interface 29 provided with an activation switch 31 for switching the control arrangement 21 between the active state and a passive state. As mentioned, the active state constitutes a state in which the control arrangement 21 initiates operation of the motor 2 upon actuation of the actuator 3. The passive state constitutes a state in which the control arrangement 21 does not initiate operation of the motor 2 upon actuation of the actuator 3.

The user interface 29 may comprise one or more further components, such as one or more output units 32 in the form of signalling lamps and/or light-emitting diodes. The control arrangement 21 may be operably connected to the one or more output units 32 and may output a current activation state of the control arrangement 21 via the one or more output units 32. As an alternative, or in addition, the control arrangement 21 may output a current state of charge level of the battery 6 via the one or more output units 32.

Thus, a user may operate the power tool 1 according to the embodiments illustrated in Fig. 1 and Fig. 2 by attaching a battery 6 to the connector portion 5 of the power tool 1, as illustrated in Fig. 2, remove the tool cover 8' if attached to the power tool 1, cause the control arrangement 21 to assume the active state by pressing on the activation switch 31, grip the handle portion 12 and then press the actuator 3.

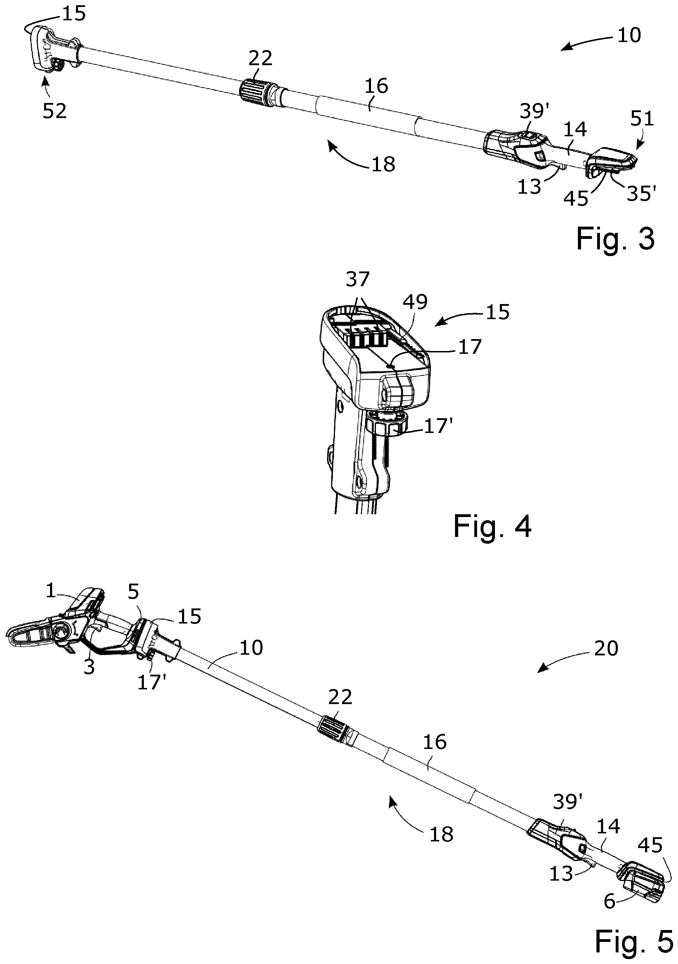

Fig. 3 illustrates a pole extension unit 10 according to some embodiments of the present disclosure. As is further explained herein, the pole extension unit 10 is configured to increase the reach of a handheld power tool. The handheld power tool may be a handheld power tool 1 according to the embodiments illustrated in Fig. 1 and Fig. 2. Therefore, below, simultaneous reference is made to Fig. 1 - Fig. 3 if not indicated otherwise.

According to the illustrated embodiments, the pole extension unit 10 comprises an elongated body 18, a battery connector portion 45 at a first end portion 51 of the pole extension unit 10, and a pole connector portion 15 arranged at a second end portion 52 of the pole extension unit 10. The second end portion 52 is opposite to the first end portion 51. In Fig. 3, no battery is attached to the battery connector portion 45 of the pole extension unit 10.

The pole extension unit 10 further comprises a first handle portion 14 and a second handle portion 16. According to the illustrated embodiments, the second handle portion 16 is a portion of the elongated body 18 of the pole extension unit 10. Moreover, the pole extension unit 10 comprises a pole actuator 13. According to the illustrated embodiments, the pole actuator 13 is arranged at the first handle portion 14. Moreover, the power tool 1 according to the illustrated embodiments comprises a locking mechanism with a locking actuator 39' for transferring the locking mechanism between a locked and an unlocked state. According to the illustrated embodiments, the locking mechanism actuator 39' is arranged at the first handle portion 14. As is further explained herein, the locking mechanism prevents actuation of the pole actuator 13 when in the locked state and allows actuation of the pole actuator 13 when in an unlocked state.

The length of the pole extension unit 10, measured from the first end portion 51 to the second end portion 52 may be within the range of 0.8 - 7 metres. Moreover, according to the illustrated embodiments, the pole extension unit 10 has a variable length measured from the first end portion 51 to the second end portion 52. That is, as indicated in Fig. 3, the pole extension unit 10 comprises a locking sleeve 22 which can be rotated between a locking position, in which telescopic parts of the elongated body 18 are locked to each other, and an unlocking position in which the telescopic parts are unlocked from each other thereby allowing a relative movement therebetween for adjusting the length of the pole extension unit 10.

**Fig. 4** illustrates an enlarged perspective view of the pole connector portion 15 of the pole extension unit 10 illustrated in Fig. 3. Below, simultaneous reference is made to Fig. 1 - Fig. 4, if not indicated otherwise.

As indicated in Fig. 4, the pole connector portion 15 comprises a set of electrical contacts 37. As is further explained herein, the set of electrical contacts 37 of the pole connector portion 15 are electrically connected to a set of electrical contacts 35' of the battery connector portion 45 of the pole extension unit 10 when the locking mechanism is in the unlocked state and the pole actuator 13 is actuated, i.e., pressed.

According to the illustrated embodiments, the pole connector portion 15 of the pole extension unit 10 comprises a protrusion 49. The protrusion 49 is configured to protrude into a slot 47 of the connector portion 5 of the power tool 1 when the pole connector portion 15 is attached to the connector portion 5 of the power tool 1. The slot 47 of the connector portion 5 of the power tool 1 is seen and indicated in Fig. 1.

**Fig. 5** illustrates a power tool assembly 20 according to some embodiments of the present disclosure. The power tool assembly 20 comprises a handheld power tool 1 and a pole extension unit 10 configured to increase the reach of the power tool 1. As can be seen in Fig. 5, the handheld power tool 1 may be a power tool 1 according to the embodiments illustrated in Fig. 1 and Fig. 2 and the pole extension unit 10 may be a pole extension unit 10 according to the embodiments illustrated in Fig. 3 and 4. Therefore, below, simultaneous reference is made to Fig. 1 - Fig. 5, if not indicated otherwise.

In Fig. 5, the pole connector portion 15 of the pole extension unit 10 is connected to the connector portion 5 of the power tool 1. Moreover, in Fig. 5, a battery 6 is attached to the battery connector portion 45 of the pole extension unit 10. According to the illustrated embodiments, the battery connector portion 45 of the pole extension unit 10 is adapted to receive a battery 6 of the same type and design as the connector portion 5 of the power tool 1.

Moreover, as is best seen in Fig. 4, the protrusion 49 of the pole connector portion 15 of the pole extension unit 10 forms part of the pole connector portion 15, wherein the pole connector portion 15 has the same or similar design as a connector portion of a battery 6 arrangeable to the connector portion 5 of the power tool 1. Moreover, as is best seen in Fig. 4, the pole connector portion 15 of the pole extension unit 10 comprises a fastening element 17 and a knob 17' connected to the fastening element 17. Moreover, as can be seen in Fig. 1, the connector portion 5 of the power tool 1 comprises an attachment aperture 7. The attachment aperture 7 of the connector portion 5 of the power tool 1 is configured to receive the fastening element 17 of the pole connector portion 15.

That is, in an attachment procedure of the power tool 1 illustrated in Fig. 1 onto the pole connector portion 15 of the pole extension unit 10 illustrated in Fig. 3 and Fig. 4, a user may slide the connector portion 5 of the power tool 1 relative to the pole connector portion 15 of the pole extension unit 10 such that the protrusion 49 of the pole connector portion 15 of the pole extension unit 10 is inserted into the slot 47 of the connector portion 5 of the pole extension unit 10. Then, the user may grip the knob 17' and gently push and turn the knob 17'.

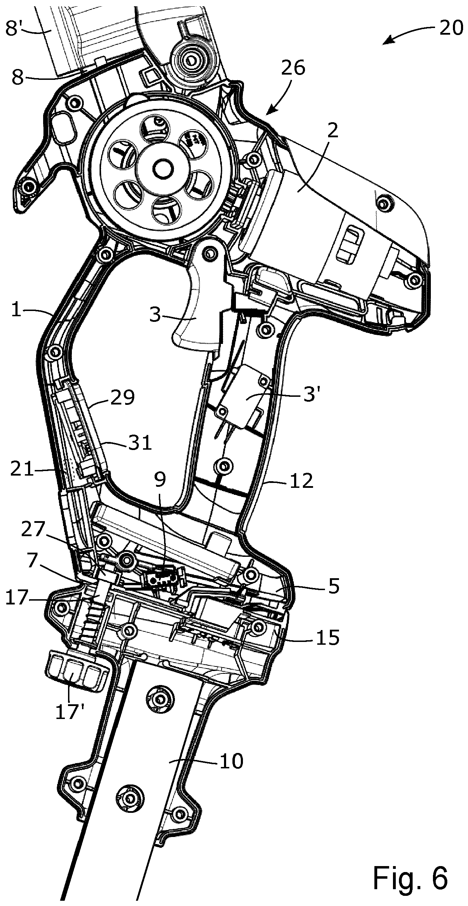

**Fig. 6** illustrates a cross section of a portion of the power tool assembly 20 illustrated in Fig. 5. As in Fig. 5, the pole connector portion 15 of the pole extension unit 10 is attached to the connector portion 5 of the power tool 1. According to the illustrated embodiments, a portion 27 of the attachment aperture 7 comprises threads configured to engage with threads of the fastening element 17. Thus, according to the illustrated embodiments, the fastening element 17 is formed as a screw comprising radially outer threads configured to engage with radially inner threads of the portion 27 of the attachment aperture 7. In this manner, the pole connector portion 15 of the pole extension unit 10 can be further secured to the connector portion 5 of the power tool 1.

Below, simultaneous reference is made to Fig. 1 - Fig. 6, if not indicated otherwise. As seen in Fig. 6, the power tool 1 comprises a safety switch 9. The safety switch 9 is operably connected to the control arrangement 21. According to embodiments herein, the safety switch 9 is configured to switch from a first state to a second state when a pole connector portion 15 is attached to the connector portion 5 of the power tool 1. In other words, according to the illustrated embodiments, the pole connector portion 15 of the pole extension unit 10 is configured to cause the safety switch 9 to switch from the first state to the second state when the pole connector portion 15 is attached to the connector portion 5 of the power tool 1.

Moreover, according to embodiments herein, the control arrangement 21 is configured to prevent a control of operation of the motor 2 based on input from the actuator 3 when the safety switch 9 is in the second state. In other words, the control arrangement 21 is configured to not initiate operation of the motor 2 based on input from the actuator 3 when the safety switch 9 is in the second state Thereby, it can be ensured that the motor 2 does not start to operate upon unintended actuations of the actuator 3 of the power tool 1 when the pole connector portion 15 of the pole extension unit 10 is attached to the connector portion 5 of the power tool 1. As a result, a power tool assembly 20 is provided which can be used in a safer manner, as is further explained herein.

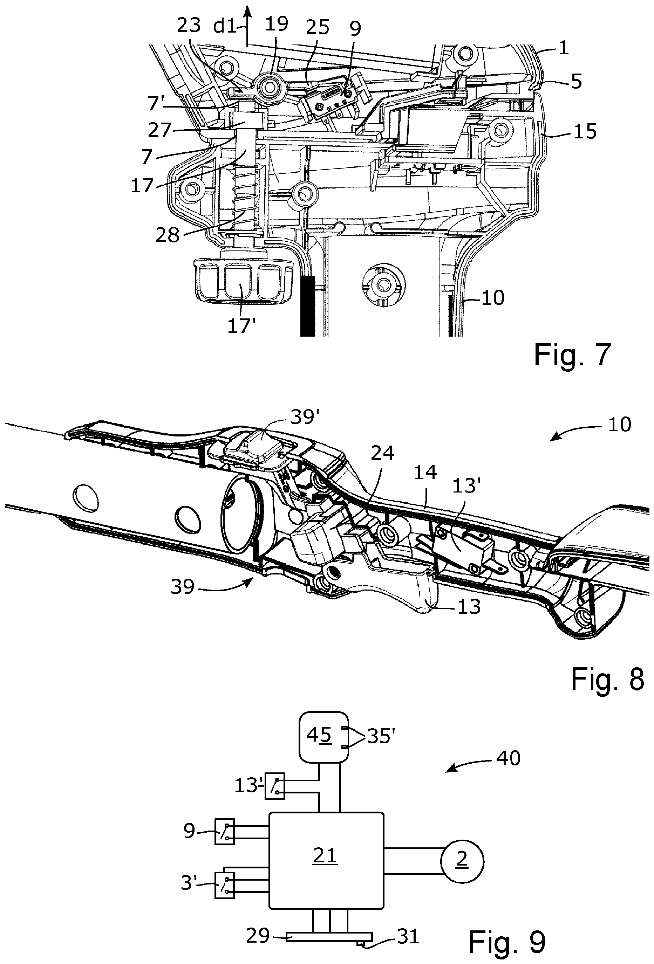

**Fig. 7** illustrates an enlarged view of the cross section of Fig. 6. Below, simultaneous reference is made to Fig. 1 - Fig. 7, if not indicated otherwise. As indicated above, the fastening element 17 of the pole connector portion 15 is configured to protrude into the attachment aperture 7 to attach the pole connector portion 15 to the connector portion 5. According to the illustrated embodiments, the fastening element 17 of the pole connector portion 15 is configured to cause the safety switch 9 to switch from the first state to the second state when the fastening element 17 is fully inserted into the attachment aperture 7.

Moreover, as indicated above, according to the illustrated embodiments, a portion 27 of the attachment aperture 7 comprises threads configured to engage with threads of the fastening element 17. Thus, according to the illustrated embodiments, the fastening element 17 is inserted into the attachment aperture 7 by turning the fastening element 17 in a locking direction relative to the portion 27 of the attachment aperture 7.

The fastening element 17 is insertable into the attachment aperture 7 in an insertion direction d1 indicated in Fig. 7. According to the illustrated embodiments, the insertion direction d1 is substantially perpendicular to the sliding direction of the protrusion 49 of the pole connector portion 15 of the pole extension unit 10 relative to the slot 47 of the connector portion 5 of the power tool 1 in the attachment procedure of the power tool 1 onto the pole connector portion 15 of the pole extension unit 10 explained above. Thereby, it can be ensured that the connector portion 5 of the power tool 1 is securely attached to the pole connector portion 15 of the pole extension unit 10 when the fastening element 17 is inserted into the attachment aperture 7.

As indicated in Fig. 7, according to the illustrated embodiments, the pole connector portion 15 of the pole extension unit 10 comprises a spring member 28. The spring member 28 is configured to bias the fastening element 17 in a direction opposite to the insertion direction d1. In this manner, a more user-friendly pole extension unit 10 and power tool assembly 20 is provided because the spring member 28 can ensure that the fastening element 17 assumes a position allowing the initial sliding of the protrusion 49 of the pole connector portion 15 into the slot 47 of the connector portion 5 of the power tool 1 in the attachment procedure of the power tool 1 onto the pole connector portion 15 explained above.

According to the illustrated embodiments, the power tool 1 comprises a mechanical linkage 19. The mechanical linkage 19 comprises a first portion 23 located at an end section 7' of the attachment aperture 7 and a second portion 25 operably connecting the first portion 23 to the safety switch 9. In this manner, the abutting contact between the fastening element 17 and the first portion 23 of the mechanical linkage 19 moves the second portion 25 of the mechanical linkage 19 towards the safety switch 9 which causes the safety switch 9 to switch from the first state to the second state when the fastening element 17 is inserted into the attachment aperture 7.

According to the illustrated embodiments, the safety switch 9 is a micro-switch configured to be mechanically actuated to switch from the first state to the second state when the pole connector portion 15 is attached to the connector portion 5 of the power tool 1. The safety switch 9 may be configured to switch from the first state to the second state in another manner than described above when the pole connector portion 15 is attached to the connector portion 5 of the power tool 1. As an example, the safety switch 9 may be arranged at the end section 7' of the attachment aperture 7 and may be configured to switch from the first state to the second state when a portion of the fastening element 17 is pressed against the safety switch 9. As another example, the safety switch 9 may be arranged at, or may be operably connected to, a different portion of the connector portion 5 of the power tool 1, such as for example the slot 47 and/or a portion close to the set of electrical contacts 35 of the power tool 1 illustrated in Fig. 1.

In addition, according to some embodiments of the present disclosure, the safety switch 9, as referred to herein, may be another type of switch than a micro-switch and may be configured to switch from the first state to the second state in another manner than by being mechanically actuated. The wording switch, as used herein, is intended to encompass a device for making and breaking a connection in an electric circuit.

According to some embodiments, the power tool 1 may comprise a sensor assembly configured to sense when the pole connector portion 15 of the pole extension unit 10 is attached to the connector portion 5 of the power tool 1. As an example, the power tool 1 may comprise a hall effect sensor and the pole connector portion 15 of the pole extension unit 10 may comprise a magnet, wherein the safety switch is configured to switch from the first state to the second state when the magnet of the pole connector portion 15 of the pole extension unit 10 is at a predetermined distance from the hall effect sensor. According to such embodiments, the safety switch, as referred to herein, may be comprised in the control arrangement 21.

**Fig. 8** illustrates a cross section of a portion of the pole extension unit 10 according to the embodiments illustrated in Fig. 3 - Fig. 7. In Fig. 8, the locking mechanism 39, the first handle portion 14, and the pole actuator 13 of the pole extension unit 10 can be seen.

As mentioned, the locking mechanism 39 of the pole extension unit 10 is transferable between a locked state, in which the locking mechanism 39 prevents actuation of the pole actuator 13, and an unlocked state, in which the locking mechanism 39 allows actuation of the pole actuator 13. In Fig. 8, the locking mechanism 39 is illustrated in the locked state. According to the illustrated embodiments, the locking mechanism 39 can be transferred to the unlocked state by moving locking mechanism actuator 39' in a direction towards the first handle portion 14.

According to the illustrated embodiments, the locking mechanism 39 is configured to mechanically lock movement of the pole actuator 13 when the locking mechanism 39 is in the locked state. That is, in more detail, the locking mechanism 39 comprises a locking body 24 configured to lock the pole actuator 13 from moving when the locking mechanism 39 is in the locked state.

As seen in Fig. 8, according to the illustrated embodiments, the pole extension unit 10 comprises a pole actuator switch 13'. The pole actuator switch 13' is configured to switch from a first state to a second state upon actuation of the pole actuator 13. Since the pole actuator 13 is mechanically locked from moving when the locking mechanism 39 is in the locked state, the pole actuator switch 13' cannot be transferred to the second state when the locking mechanism 39 is in the locked state. However, the locking mechanism 39 is in the unlocked state, the pole the pole actuator 13 can be moved in a direction towards the pole actuator switch 13' to cause the pole actuator switch 13' to switch from the first state to the second state.

With simultaneous reference to Fig. 3, Fig. 4, and Fig. 8, according to the illustrated embodiments, the pole extension unit 10 is configured to transfer electricity from the battery connector portion 45 to the set of electrical contacts 37 when the pole actuator switch 13' is switched to the second state.

As seen in Fig. 6, according to the illustrated embodiments, the power tool 1 comprises an actuator switch 3' operably connected to the actuator 3. According to the illustrated embodiments, the control arrangement 21 is configured to prevent a control of the operation of the motor 2 based on input from the actuator 3 when the safety switch 9 is in the second state by ignoring input from the actuator switch 3'.

Moreover, in Fig. 6, the motor 2 of the power tool 1 can be more clearly seen. The motor 2 is connected to the tool 8 via a transmission assembly 26.

**Fig. 9** schematically illustrates an electrical assembly 40 of the power tool assembly 20 explained with reference to Fig. 1 - Fig. 8. Below, simultaneous reference is made to Fig. 1 - Fig. 9, if not indicated otherwise.

The electrical assembly 40 comprises the control arrangement 21, the safety switch 9, the motor 2, the interface 29 with the activation switch 31, the actuator switch 3' of the power tool 1, the pole actuator switch 13' of the pole extension unit 10, and the set of electrical contacts 35' of the battery connector portion 45 of the pole extension unit 10.

The schematic illustration of the electrical assembly 40 illustrated in Fig. 9 can be said to represent an electrical assembly 40 of the power tool assembly 20 illustrated in Fig. 5, i.e., a power tool assembly 20 in which the pole connector portion 15 of the pole extension unit 10 is attached to the connector portion 5 of the power tool 1 and in which a battery 6 is attached to the battery connector portion 45 of the pole extension unit 10.

As explained, a set of electrical contacts of the battery 6 abuts against the set of electrical contacts 35' of the battery connector portion 45 of the pole extension unit 10 when the battery 6 is attached the battery connector portion 45.

According to the illustrated embodiments, the control arrangement 21 is configured to assume the passive state when the safety switch 9 is switched to the second state, i.e., when the pole connector portion 15 is attached to the connector portion 5 of the power tool 1. In the passive state, the control arrangement 21 is configured to ignore input from the actuator switch 3' of the power tool 1. Moreover, in the passive state, the control arrangement 21 is configured to render the user interface 29 inoperable as explained above.

Moreover, as mentioned above, the connector portion 5 of the power tool 1 comprises a set of electrical contacts 35 configured to abut against the set of electrical contacts 37 of the pole connector portion 15 when the pole connector portion 15 is attached to the connector portion 5.

According to the illustrated embodiments, the control arrangement 21 is configured to operate the motor 2 if the safety switch 9 is in the second state and electricity is supplied to the set of electrical contacts 35 of the connector portion 5 of the power tool 1. In more detail, as mentioned, according to the illustrated embodiments, the motor 2 is an electric motor. According to these embodiments, the control arrangement 21 is configured to transfer electricity from the set of electrical contacts 35 of the connector portion 5 of the power tool 1 to the motor 2 if the safety switch 9 is in the second state.

Moreover, as mentioned, the pole extension unit 10 is configured to transfer electricity from the battery connector portion 45 to the set of electrical contacts 37 upon actuation of the pole actuator 13, i.e., when the pole actuator switch 13' is transferred to the second state. In this manner, the operation of the motor 2 of the power tool 1 can be controlled in a simple, safe, and user-friendly manner using the pole actuator 13 when the pole connector portion 15 of the pole extension unit 10 is attached to the connector portion 5 of the power tool 1.

The control arrangement 21 may comprise a calculation unit which may take the form of substantially any suitable type of processor circuit or microcomputer, e.g., a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

The control arrangement 21 may further comprise a memory unit, wherein the calculation unit may be connected to the memory unit, which may provide the calculation unit with, for example, stored program code and/or stored data which the calculation unit may need to enable it to do calculations. The calculation unit may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors.

The control arrangement 21 is connected to components of the power tool assembly 20 for receiving and/or sending input and output signals. These input and output signals may comprise waveforms, pulses, or other attributes which the input signal receiving devices can detect as information and which can be converted to signals processable by the control arrangement 21. These signals may then be supplied to the calculation unit. Each of the connections to the respective components of the power tool assembly 20 for receiving and sending input and output signals may take the form of a cable or a wireless connection.

In the embodiments illustrated, the power tool assembly 20 comprises a control arrangement 21 but might alternatively be implemented wholly or partly in two or more control arrangements or two or more control units.

The power tool 1, as referred to herein, may be provided and sold as a separate unit. Likewise, the pole extension unit 10, as referred to herein, may be provided and sold as a separate unit. Furthermore, the power tool 1 and the pole extension unit 10, as referred to herein, may be provided and sold as a kit, herein referred to as a power tool assembly 20.

The wording "substantially perpendicular to", as used herein, may encompass that the angle between the directions referred to is within the range of 80 - 100 degrees or is within the range of 83 - 97 degrees.

With reference to Fig. 1 and Fig. 2, the battery 6 is attached to the power tool 1 without using a fastening element protruding into the attachment aperture 7 of the connector portion 5 of the power tool 1. Therefore, the safety switch 9 will be in the first state when a battery 6 is attached to the connector portion 5 of the power tool 1 and the motor 2 can be operated using the actuator 3 of the power tool 1 when a battery 6 is attached to the connector portion 5 of the power tool 1.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A handheld power tool (1) comprising:
- a tool (8),
- a motor (2) configured to power the tool (8),
- an actuator (3),
- a control arrangement (21), and
- a connector portion (5) configured to receive a pole connector portion (15) of a pole extension unit (10) for increasing the reach of the power tool (1),
wherein the power tool (1) comprises a safety switch (9) configured to switch from a first state to a second state when a pole connector portion (15) is attached to the connector portion (5) of the power tool (1),
and wherein the control arrangement (21) is configured to prevent a control of operation of the motor (2) based on input from the actuator (3) when the safety switch (9) is in the second state.

2. The power tool (1) according to claim 1, wherein the motor (2) is an electric motor.

3. The power tool (1) according to claim 1 or 2, wherein the power tool (1) comprises an actuator switch (3') operably connected to the actuator (3), and wherein the control arrangement (21) is configured to prevent a control of the operation of the motor (2) based on input from the actuator (3) by ignoring input from the actuator switch (3').

4. The power tool (1) according to any one of the preceding claims, wherein the connector portion (5) is a battery connector portion capable of receiving a battery (6) when no pole connector portion (15) is attached to the connector portion (5).

5. The power tool (1) according to any one of the preceding claims, wherein the connector portion (5) of the power tool (1) comprises an attachment aperture (7) for receiving a fastening element (17) of a pole connector portion (15), and wherein the safety switch (9) is configured to switch from the first state to the second state when a fastening element (17) of a pole connector portion (15) is inserted into the attachment aperture (7).

6. The power tool (1) according to claim 5, wherein the power tool (1) comprises a mechanical linkage (19) comprising a first portion (23) located at an end section (7') of the attachment aperture (7) and a second portion (25) operably connecting the first portion (23) to the safety switch (9).

7. The power tool (1) according to claim 5 or 6, wherein at least a portion (27) of the attachment aperture (7) comprises threads.

8. The power tool (1) according to any one of the preceding claims, wherein the power tool (1) comprises an activation switch (31) for switching the control arrangement (21) between an active state and a passive state, the active state constituting a state in which the control arrangement (21) initiates operation of the motor (2) upon actuation of the actuator (3), and the passive state constituting a state in which the control arrangement (21) does not initiate operation of the motor (2) upon actuation of the actuator (3), and wherein the control arrangement (21) is configured to assume the passive state when the safety switch (9) is switched to the second state.

9. The power tool (1) according to any one of the preceding claims, wherein the connector portion (5) of the power tool (1) comprises a set of electrical contacts (35) configured to abut against a set of electrical contacts (37) of a pole connector portion (15) when a pole connector portion (15) is attached to the connector portion (5), and wherein the control arrangement (21) is configured to operate the motor (2) if the safety switch (9) is in the second state and electricity is supplied to the set of electrical contacts (35) of the connector portion (5) of the power tool (1).

10. A pole extension unit (10) configured to increase the reach of a handheld power tool (1), wherein the handheld power tool (1) is a power tool (1) according to any one of the preceding claims,
wherein the pole extension unit (10) comprises a pole connector portion (15) configured to be connected to the connector portion (5) of the power tool (1) to increase the reach of the handheld power tool (1),
and wherein the pole connector portion (15) is configured to cause the safety switch (9) to switch from the first state to the second state when the pole connector portion (15) is attached to the connector portion (5) of the power tool (1).

11. The pole extension unit (10) according to claim 10, wherein the connector portion (5) of the power tool (1) comprises an attachment aperture (7), and wherein the pole connector portion (15) comprises a fastening element (17) configured to protrude into the attachment aperture (7) to attach the pole connector portion (15) to the connector portion (5), and wherein the fastening element (17) of the pole connector portion (15) is configured to cause the safety switch (9) to switch from the first state to the second state when the fastening element (17) is inserted into the attachment aperture (7).

12. The pole extension unit (10) according to claim 10 or 11, wherein the pole connector portion (15) comprises a set of electrical contacts (37) configured to abut against a set of electrical contacts (35) of the connector portion (5) of the power tool (1) when the pole connector portion (15) is attached to the connector portion (5) of the power tool (1), wherein the pole extension unit (10) comprises a pole actuator (13) and a battery connector portion (45) for receiving a battery (6), and wherein the pole extension unit (10) is configured to transfer electricity from the battery connector portion (45) to the set of electrical contacts (37) upon actuation of the pole actuator (13).

13. The pole extension unit (10) according to claim 12, wherein the pole extension unit (10) comprises a locking mechanism (39) transferable between a locked state, in which the locking mechanism (39) prevents actuation of the pole actuator (13), and an unlocked state, in which the locking mechanism (39) allows actuation of the pole actuator (13).

14. The pole extension unit (10) according to any one of the claims 10 - 13, wherein the pole extension unit (10) comprises a pole actuator switch (13') configured to switch from a first state to a second state upon actuation of the pole actuator (13), and wherein the pole extension unit (10) is configured to transfer electricity from the battery connector portion (45) to the set of electrical contacts (37) when the pole actuator switch (13') is switched to the second state.

15. A power tool assembly (20) comprising:
- handheld power tool (1), and
- a pole extension unit (10) configured to increase the reach of the power tool (1),
wherein the power tool (1) comprises:
- a tool (8),
- a motor (2) configured to power the tool (8),
- an actuator (3),
- a control arrangement (21), and
- a connector portion (5) configured to receive a pole connector portion (15) of the pole extension unit (10) for increasing the reach of the power tool (1),
wherein the power tool (1) comprises a safety switch (9) configured to switch from a first state to a second state when the pole connector portion (15) is attached to the connector portion (5) of the power tool (1),
and wherein the control arrangement (21) is configured to prevent a control of operation of the motor (2) based on input from the actuator (3) when the safety switch (9) is in the second state.
